Europäisches Patentamt

European Patent Office

Office européen des brevets

(19)

(11) Publication number : **0 463 814 A2**

# (12) EUROPEAN PATENT APPLICATION

(21) Application number : **91305617.2**

(22) Date of filing : **21.06.91**

(51) Int. Cl.[5] : **H04N 17/00**

(30) Priority : **28.06.90 GB 9014366**

(43) Date of publication of application :
**02.01.92 Bulletin 92/01**

(84) Designated Contracting States :
**BE DE FR GB IT SE**

(71) Applicant : **GEC-MARCONI LIMITED**
**The Grove, Warren Lane**
**Stanmore, Middlesex HA7 4LY (GB)**

(72) Inventor : **Matthews, John Hawkins**
**25 Fenwick Way**
**Canvey Island, Essex (GB)**

(74) Representative : **Elliott, Frank Edward et al**
**GEC Patent Department (Chelmsford Office)**
**GEC-Marconi Research Centre West**
**Hanningfield Road**
**Great Baddow Chelmsford Essex CM2 8HN**
**(GB)**

(54) Improvements in or relating to imagers.

(57)    A method of and apparatus for calibrating an imager of the kind where an image of a field of view is scanned along a plurality of electro-photosensitive detectors, electrical bias being applied along the detector to cause minority carrier drift, the method comprises providing high contrast target pairs in the field of view, adjusting the electrical bias until the carrier drift matches the scanning speed as indicated by maximum discernment of the target pairs in the detector output.

EP 0 463 814 A2

The invention concerns imagers particularly, but not exclusively, thermal imagers comprising one or more detector strips of a photosensitive material whereon may be imaged radiation from a field of view.

Each strip of photosensitive material is of the kind in which minority carriers are generated by impinging photons.

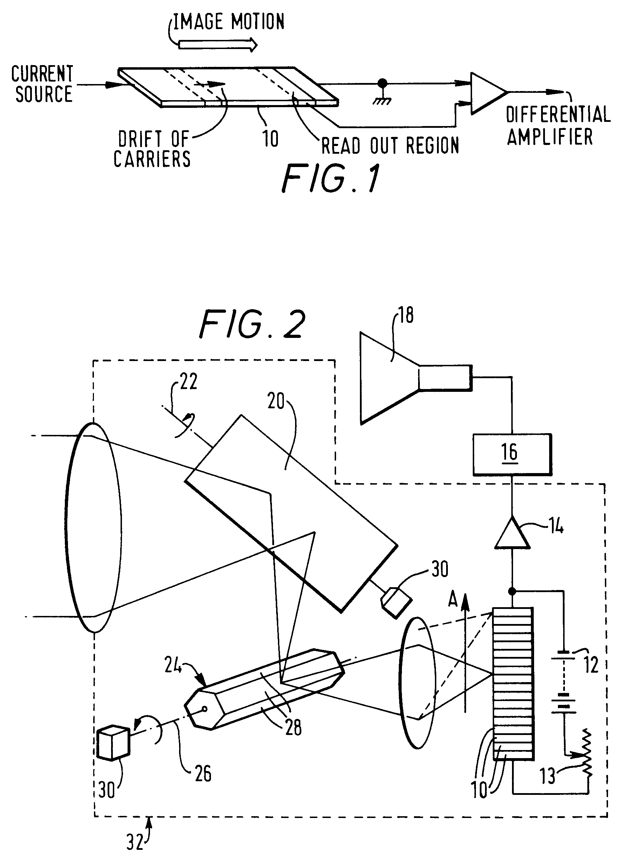

If a bias field is imposed along the length of the strip, the carriers so generated are caused to drift along the strips, their drift speed and direction being dependent on the level and polarity of bias applied to the strip. An example of such a strip 10 is diagrammatically illustrated in Figure 1 of the accompanying drawings. When the carriers reach an appropriate section of the strip, their modulation of the bias current can be detected and such modulation is representative of the image to which the strip was exposed.

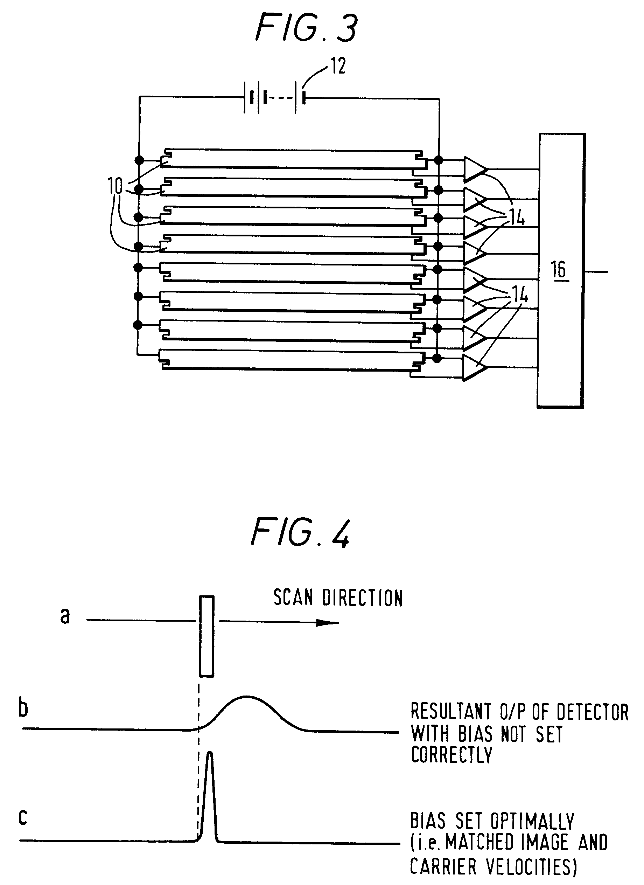

In a known thermal imager 32, diagrammatically illustrated in Figure 2 of the accompanying drawings, a plurality of the strips 10 (see Figure 3 of the accompanying drawings) are parallely arranged in closely adjacent relationship to receive an image of the field of view of the imager, scanned therealong. Each strip 10 is of, for example, cadmium mercury telluride and is connected to a variable source 12, 13 of bias. The output of each strip is fed by way of a detector 14 to an external image processor 16 and thereafter to a remote monitor 18 all of which are diagrammatically illustrated in Figure 2. To achieve maximum sensitivity and contrast from the imager, it is essential that the speed of scan of the image along the strips should match accurately the drift speed of the carriers occasioned by the applied bias. The field of view is scanned optically by a first surface silvered plane mirror pivotable about a first axis 22 lying in its own plane and a six sided drum 24 rotating about a second axis 26 orthogonal to the pivot axis of the plane mirror. Each side 28 of the drum provides a surface silvered plane mirror. The imager 32 is housed separately of the monitor 18 and usually also of the image processor 16.

Other optical elements are provided to produce an image in the plane of the detector strips 10.

The rotating drum causes a section of the field of view of the imager to be scanned along the detector strips in the direction of the arrow A. Pivoting of the plane mirror caused subsequent sections of the field of view of the imager to be scanned along the detector strips 10, the rotation of the drum and the pivoting of the mirror being co-ordinated such that each cycle causes a complete scan of the field of view of the imager.

It is difficult accurately to control motors 30 to vary the speed of scan to match the drift speed of the carriers. It is simpler, and more usual, to vary the bias field as indicated by the rheostat 13 so that the drift speed of the carriers matches the scan speed of the image. It will be appreciated that, if the speeds can be matched exactly along the lengths of the detector strips 10, then an integration, for the duration of the scan, of the radiation from any point in the field of view is effected. In this way the sensitivity of the imager is greatly enhanced. Conversely, if the speeds are not matched, image contrast suffers to an extent dependant upon the extent of mismatch. Accurate calibration of the imager is essential for maximum sensitivity.

Conventionally, calibration of such an imager has been effected by including in the field of view a narrow (in the direction of scan) hot target. Thereafter, a technician adjusts the bias field applied to the detector strips to maximise the output of the detectors and hence the imaging of the target. Figure 4 of the accompanying drawings diagrammatically illustrates a hot target (Figure 4a) and oscilloscope outputs showing the modulation of the bias current in the case of mismatched speeds (Figure 4b) and matched speeds (Figure 4c). This method relies on the skill of a technician to judge optimum match of bias level (carrier drift speed) and fixed optical scan speed. Further this method does not provide any quantifiably measure of modulation transfer function (MTF) of the imager and the detector strips.

It is an object of the present invention to provide a method of calibrating an imager and a calibration apparatus wherein the aforesaid disadvantages are overcome. A further object of the present invention is the provision of an imager having a quantifiably optimised modulation transfer function.

According to the present invention, there is provided a method of calibrating an imager comprising the steps of scanning a field of view including at least one and, preferably, a plurality of pairs of targets, each target having a large radiation difference from its surrounding background, the targets being elongate transverse to the direction of scan, and being substantially parallel, monitoring the output of detectors whereon the field of view is imaged, to discern target pair, adjusting the bias level applied to the detectors until the pair is optimally discernible.

The imager may be a thermal imager and the targets are preferably elongate hot strips against a relatively cold background.

A plurality of the target pairs may be provided, the targets of each pair being spaced differently.

The spacing between the targets of each pair may be arranged in a predetermined manner whereby a minimum acceptable MTF may be applied.

In the case of a thermal imager and hot targets, the monitored output of a discernible target pair comprises two closely spaced peaks with a trough therebetween. The method of the present invention comprises the step of adjusting the bias level to provide maximum depth to the trough.

The invention will be described further, by way of example, with reference to the accompanying drawings wherein:

Figures 1 to 4, as above described, illustrate known detectors, imagers and their method of calibration;

Figures 5a and 5b illustrate a target, and the detected output of the imager in carrying out the method of the present invention; and

Figure 6 is a diagrammatic representation of a calibrator, for an imager, in accordance with the present invention.

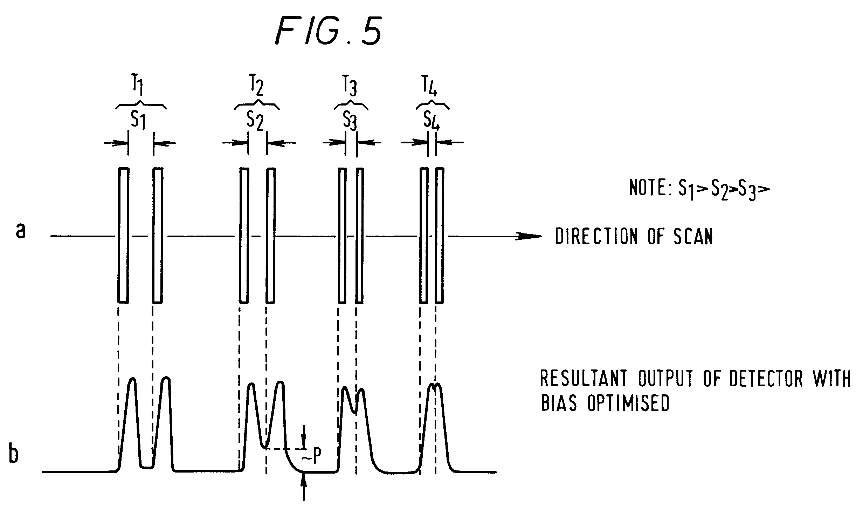

The present invention is directed to the calibration of imagers, for example, thermal imagers as above described. In accordance with the present invention, a thermal imager is calibrated using a thermal image as shown in Figure 5a. The thermal image comprises a plurality, for example, four pairs of targets. Each target comprises a strip 34 arranged so that it is elongate in a direction transverse to the direction of scan of the imager. A first target pair $T_1$ has a spacing $S_1$. Subsequent target pairs $T_2$, $T_3$, and $T_4$ have spacings $S_2$, $S_3$ and $S_4$ where $S_1>S_2>S_3>S_4$.

The spacings are predetermined so as quantifiably to determine the MTF of the imager.

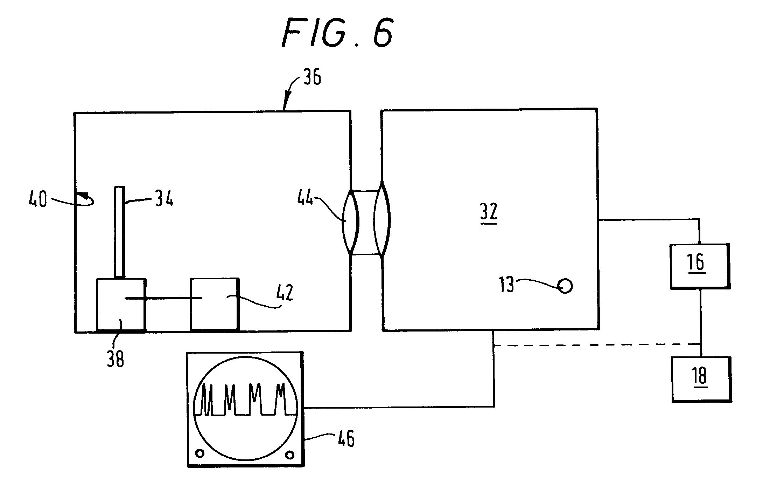

Calibration may be effected in the field using a calibrator as shown diagrammatically in Figure 6. The calibrator comprises a housing 36 wherein the target strips 34 are mounted. For a thermal imager, heating means 38 may be provided for raising the temperature of the strips relative to the background. Alternatively, the background to the targets (the wall 40 of the housing 36) may have its temperature controlled so as to provide the necessary image contrast.

Motor means 42, coupled to the mount for the strips 34, may be provided for adjusting the respective spacing of the pairs of strips.

A lens 44 is provided for imaging the target pairs at or near infinity (matching the usually fixed focus setting of the imager 32).

An output of the imager 32 may be taken from the imager directly, from a node prior to the processor 16 or prior to the monitor 18 of the imager, and is fed to a monitor or oscilloscope 46, as appropriate, of the calibrator.

The calibrator is positioned so that its target pairs $T_1$ to $T_4$ are in the field of view of the imager 32, to be scanned seriatim as indicated in Figure 5a, by an optical scanning apparatus of the imager for example, as diagrammatically illustrated in Figure 2 of the drawings. The output of the imager is viewed either on the monitor or oscilloscope 46 or on the imager display 18 and the bias applied to the detector strips 10 is adjusted using the rheostat 13. The display is as shown in Figure 5b.

Adjustment of the electrical bias applied to the strips 10 is effected, not to maximise the output but to minimise the level indicated by the letter 'P' of the trough between the representations of the targets of each target pair $T_1$ to $T_4$. If the spacings have been optimumly chosen, one pair eg. $T_4$ will have a relatively indiscernable trough, whereas one pair eg. $T_1$ will have a trough of zero 'P' level, ie. at background signal level. Two target pairs eg. $T_2$ and $T_3$ will have readily discernable troughs and the bias is adjusted to minimise the level of 'P' of their troughs.

If necessary, the spacing of the strips 34 of the target pairs may be varied using the motor means 42.

If the spacings $S_1$ to $S_4$ are known, quality control may be exercised if the levels 'P' of the troughs of the target $T_2$ or $T_3$ are above certain predetermined maxima.

In any case, adjustment of the bias has a readily discernable effect facilitating the set-up of the imager by a technician and determination that the MTF of the imager is of an acceptable standard.

In practice, the target spacing may be set so that the target pair $T_4$ provides a just discernable trough for acceptable image MTF. Optimal setting of the bias is effected on a readily discernable image eg. that of the target pair $T_2$ or $T_3$.

The invention is not confined to the precise details of the foregoing description and variations may be made thereto. For instance, the imager described is a thermal imager and the photosensitive strips 10 are sensitive to radiation in the infrared region. The invention is equally applicable to other imagers, the strips 10 being sensitive to the appropriate range of the electromagnetic radiation spectrum. Other forms of optically scanning imagers are well known in the art. The invention is equally applicable to them.

## Claims

1. A method of calibrating an imager, the imager comprising a photosensitive detector elongate in the direction of scan, whereon a field of view is imaged to generate in the detector minority electrical carriers, electrical bias means being provided to cause drift of the carriers along the detector, comprising the steps of scanning a field of view including at least one pair of targets, each target contrasting strongly with its background, being elongate transverse to the direction of scan, and being substantially parallel to the other target or targets, monitoring the output of the detector to discern the target pair, and adjusting the electrical bias applied to the detector until the pair is optimally discernable.

2. A method as claimed in claim 1 wherein the imager is a thermal imager, a plurality of the detectors are provided, each detector being sensitive to radiation in the infrared, further comprising the step of providing a plurality of the target pairs having a different spacing, the targets being hot against a relatively cold background, and adjusting the electrical bias until optimum, discernment of a discernable minimally spaced target pair is achieved.

3. A method as claimed in claim 2 comprising the step of predetermining the spacings of the target pairs such that discernment of a particular pair is indicative of an acceptable MTF.

4. A method as claimed in claim 1, 2 or 3 wherein the output of the detector is visible as two peaks with a trough therebetween, and wherein adjustment of the electrical bias is effected to maximise the depth of the trough.

5. A method of calibrating an imager substantially as hereinbefore described with reference to Figure 5 of the accompanying drawings.

6. An imager when calibrated by the method as claimed in any of claims 1 to 5.

7. A calibrator, for calibrating an imager, comprising at least one pair of targets, means for producing a high contrast between the at least one pair of targets and a background thereof, each target being elongate and being substantially parallel to the other target or targets, means for monitoring the output of the imager, and means for imaging the at least one pair of targets in the field of view of the imager.

8. A calibrator substantially as hereinbefore described with reference to and as illustrated in Figures 5 and 6 of the accompanying drawings.

IMAGE MOTION

CURRENT
SOURCE

DRIFT OF
CARRIERS

10

READ OUT REGION

DIFFERENTIAL
AMPLIFIER

## FIG.1

## FIG.2

18

22

20

16

14

A

30

24

30

26

28

12

10

13

32

## FIG. 3

## FIG. 4

SCAN DIRECTION

a

b — RESULTANT O/P OF DETECTOR WITH BIAS NOT SET CORRECTLY

c — BIAS SET OPTIMALLY (i.e. MATCHED IMAGE AND CARRIER VELOCITIES)

# FIG.5

NOTE: $S_1 > S_2 > S_3 >$

DIRECTION OF SCAN

RESULTANT OUTPUT OF DETECTOR WITH BIAS OPTIMISED

EP 0 463 814 A2

FIG. 6